# EUROPEAN PATENT APPLICATION

(11) **EP 4 094 922 A1**
(43) Date of publication of application: **30.11.2022**
(21) Application number: 21888271.0
(22) Date of filing: 01.09.2021
(51) Int. Cl.: B29C 51/10, A47B 13/08, A47C 7/02, A47B 3/083

(54) **MANUFACTURING METHOD FOR PLATE, PLATE, AND FURNITURE HAVING PLATE**

(30) Priority: 04.11.2020 CN 202011217914
(71) Applicant: New-Tec Integration (Xiamen) Co., Ltd., Xiamen, Fujian 361100 (CN)
(72) Inventor: LENG, Luhao, Xiamen, Fujian 361005 (CN)
(74) Representative: Zacco Sweden AB
(86) International application number: PCT/CN2021/116043
(87) International publication number: WO 2022/095572

(57) **Abstract**

According to the present disclosure, there are provided a method of manufacturing a panel, the panel and furniture comprising the panel. The manufacturing method includes steps of: placing the frame on a top of a mold, the frame at an outer edge being formed with a protrusion; shaping the plastic blank sheet by vacuum forming such that the plastic blank sheet wraps the frame and the mold; demolding and trimming, to at least guarantee that the trimmed plastic blank sheet wraps the protrusion of the frame and thus ensure that the frame is embedded in the trimmed plastic blank sheet. The method of manufacturing a panel according to the present disclosure has the advantages of being efficient, implementing the process of wrapping a frame within a plastic panel in a simple fashion, and enabling the panel formed by vacuum forming to be smooth in profile and attain a high intensity. In subsequent use, the panel is invulnerable to deformation and can be prolonged in service life.

## Description

### FIELD

The present disclosure generally relates to the field of furniture, and more specifically, to a method of manufacturing a panel, the panel produced therefrom and furniture comprising the panel.

### BACKGROUND

With the increased demands for a better life, people are imposing higher requirements on household products. Consumers gradually tend to favor those household products both exhibiting good performance in function and stability and pleasing to eyes. For the panels of many of the existing furniture, they are manufactured by vacuum forming process to attain a smooth profile. However, in the existing vacuum forming process, it is required to perform demolding after the vacuum forming process, where only the plastic panel is retained. With such an arrangement, the final obtained panel may be insufficient in strength and thus cannot meet the users' demands on the furniture strength.

As a result, there arises a need for a method of manufacturing a panel, the panel produced therefrom, and furniture comprising the panel, to at least partly solve the above-mentioned problem.

### SUMMARY

The main purpose of the present disclosure is to provide a method of manufacturing a panel, the panel produced therefrom and furniture comprising the panel. The method of manufacturing a panel according to the present disclosure has the advantages of implementing the process of wrapping a frame within a plastic panel in a simple and efficient manner, so that the panel formed by vacuum forming process is enable to both have a smooth profile and attain a high strength. As such, the panel is invulnerable to deformation in subsequent use, and can be prolonged in service life.

According to a first aspect of the present disclosure, there is provided a method of manufacturing a panel that is of a board structure defined in a transverse direction and a longitudinal direction and comprises a frame and a plastic panel wrapping the frame. The method according to the present disclosure comprises the steps of: placing the frame on a top of a mold matching the frame in shape, wherein a protrusion is formed at an outer edge of the frame , protruding outwards from the mold in an extension direction of a formed panel; placing a plastic blank sheet on a top surface of the mold having the frame mounted thereon, and applying a suction force in a direction perpendicular to the extension direction of the panel to shape the plastic blank sheet by vacuum forming process, such that the plastic blank sheet is wrapped around the frame and the mold; moving the mold along a direction perpendicular to the extension direction of the panel to separate the mold from the frame and the plastic blank sheet; and cutting and trimming the plastic blank sheet, to guarantee that the trimmed plastic blank sheet at least covers an outward facing surface of the protrusion of the frame and thus ensure that the frame is embedded within the trimmed plastic blank sheet.

In an embodiment according to the present disclosure, the mold is provided at its lower edge with a step portion formed around a body of the mold, and the frame is configured to adaptively sit on the step portion around the body of the mold.

In a preferable embodiment according to the present disclosure, the top surface of the mold is a rugged surface such that the plastic blank sheet shaped by the vacuum forming process has an undulating shape at corresponding positions.

In another preferable embodiment according to the present disclosure, the mold is of a rectangular shape defined in a transverse and a longitudinal directions, and the mold is formed at a top surface with a plurality of raised ribs spaced apart in the longitudinal direction and extending in the transverse direction, such that a top surface of a final panel is shaped as the rugged surface.

In a further preferable embodiment according to the present disclosure, the top surface of the mold is a smoothly undulating surface, which results in that the top surface of a final panel is a smooth undulating surface accordingly.

In a further preferable embodiment according to the present disclosure, the trimming step comprises: cutting the plastic blank sheet along a cutting trace located on a part of the plastic blank sheet fitting with a bottom surface of the protrusion.

In a further preferable embodiment according to the present disclosure, the trimming step comprises: cutting the plastic blank sheet along a cutting trace that is located on a part of the plastic blank sheet disposed below the protrusion and fitting with an outer side wall of the frame.

In a further preferable embodiment according to the present disclosure, the frame is provided at an inner surface with an inner wall extending perpendicularly downwards from a top wall of the frame, and the method further comprises: after the trimming, rolling a lower end of the inner wall outwards and upwards in order to shield the cutting trace on the plastic blank sheet.

In a further preferable embodiment according to the present disclosure, the method further comprises: selecting a metal frame as the frame; selecting a polypropylene sheet as the plastic blank sheet; and shaping the plastic blank sheet by vacuum molding process.

In a second aspect of the present disclosure, there is provided a panel manufactured with the method according to any one of the embodiments described above. The panel comprises a plastic panel and a frame, and the plastic panel is shaped by vacuum molding and wraps the frame therein.

In a third aspect of the present disclosure, there is provided furniture comprising a panel formed according to the second aspect of the present disclosure.

In a preferable embodiment according to the present disclosure, the furniture is a box, and the panel is formed as at least a part of sidewalls of the box.

In another preferable embodiment according to the present disclosure, the plastic panel is formed by vacuum forming to have a smooth undulating surface, and the furniture is a chair, wherein the panel is formed into a seat of the chair.

In a further preferable embodiment according to the present disclosure, the furniture is a desk comprising a desk board and legs, the desk board comprising:
a desk board body comprising at least two layers of panels attached to each other and having a pair of parallel edges opposing to each other, wherein a thickness of the desk board body at the pair of parallel edges is less than a thickness at a middle position of the desk board body;
a desk board frame surrounding the desk board body and enabling to engage with the corresponding edges of the desk board body, wherein each of the parts of the desk board frame corresponding to the pair of parallel edges of the desk board body is formed with a recess that opens towards the desk board body and extends in an extension direction of the parallel edges;
wherein an opening of the recess is sized consistent with the thickness of the desk board body at the pair of parallel edges, such that the pair of parallel edges of the desk board body can be inserted into the corresponding recesses of the desk board frame, and can slide therein along the extension direction of the parallel edges the desk board body, thereby assembling the desk board body with the desk board frame; and
wherein the desk board body is formed by attaching at least two layers of the panels.

In a preferable embodiment according to the present disclosure, the desk board comprises at least two desk board units foldable relative to each other, and each of the desk board units comprises a pair of the desk board frame and the desk board body that can cooperate with each other.

According to the method of manufacturing a panel of the present disclosure, the metal frame can be retained within the plastic panel after the completion of the vacuum molding process, such that the panel formed by the vacuum molding both has a smooth profile and a high strength. In the subsequent use, the panel is invulnerable to deformation and thus can be prolonged in service life.

### BRIEF DESCRIPTION OF THE DRAWINGS

The above and other objects, features, advantages, and functions of the present disclosure may be understood in accordance with the following description of the preferred embodiments taken in conjunction with the accompanying drawings as follows. The same reference symbols refer to the same or like components throughout the drawings. It is to be understood by those skilled in the art that the drawings are merely intended to illustrate preferred embodiments of the present disclosure without imposing any limitation to the protection scope of the present application, and respective components therein are not necessarily drawn to scale.
Figures 1, 2, 3A, 4, 5A and 6A are schematic diagrams of steps sequentially performed in a method of manufacturing a panel according to a first embodiment of the present disclosure;
Figure 3B is a sectional view taken along a line A-A in Figure 3A;
Figure 3C is a partial enlarged view of Part B marked in Figure 3B;
Figure 5B is a partial enlarged view of a longitudinal end portion shown in Figure 5A;
Figure 6B is a sectional view taken along a line D-D in Figure 6A;
Figure 6C is a partial enlarged view of Part C marked in Figure 6B;
Figure 7 is a schematic diagram of furniture in the first embodiment according to the present disclosure;
Figures 8, 9, 10A, 11A, 11B, 12A and 13A are schematic diagrams of steps performed sequentially in a method of manufacturing a panel according to a second embodiment of the present disclosure;
Figure 10B is a sectional view taken along a line F-F in Figure 10A;
Figure 10C is a partial enlarged view of Part G marked in Figure 10B;
Figure 11B is a partial enlarged view taken along a line H-H in Figure 11A;
Figure 11C is a partial enlarged view of Part I marked in Figure 11B;
Figure 12B is a sectional view taken along a line J-J in Figure 12A;
Figure 12C is a partial enlarged view of Part K marked in Figure 12B;
Figure 13B is a sectional view taken along a line L-L in Figure 13A;
Figure 13C is a partial enlarged view of Part M indicated in Figure 13B;
Figures 14, 15, 16A, 17A and 18A are schematic diagrams of steps performed sequentially in a method of manufacturing a panel according to a third embodiment of the present disclosure;
Figure 16B is a sectional view taken along a line N-N in Figure 16A;
Figure 16C is a partial enlarged view of Part O marked in Figure 16B;
Figure 17B is a sectional view taken along a line P-P in Figure 17A;
Figure 17C is a partially enlarged view of Part Q marked in Figure 17B;
Figure 18B is a sectional view taken along a line R-R in Figure 18A;
Figure 18C is a partially enlarged view of Part S marked in Fig. 18B;
Figure 19 is a schematic diagram of furniture in the third embodiment according to the present disclosure;
Figure 20 is a schematic diagram of furniture according to a fourth embodiment of the present disclosure;
Figures 21 and 22 are schematic diagrams of a process of assembling a desk board unit shown in Figure 20;
Figure 23 is an exploded view of a desk board unit shown in Figure 20; and
Figure 24 is a sectional view taken along a line S-S in Figure 20.

### DETAILED DESCRIPTION OF EMBODIMENTS

Reference now will be made to the drawings to describe in detail embodiments of the present disclosure. What will be described herein will only cover preferred embodiments of the present disclosure, and those skilled in the art will recognize other possible manners which also fall into the scope described herein, on the basis of the preferred embodiments described herein.

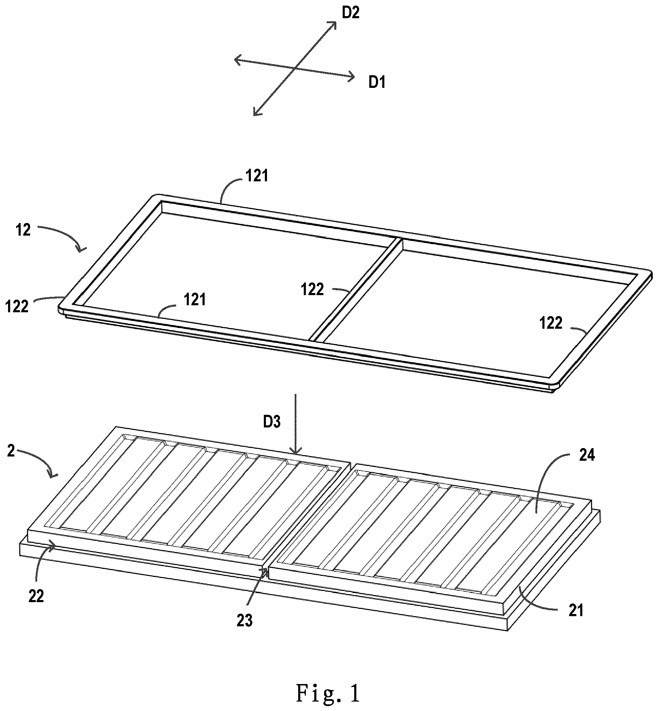

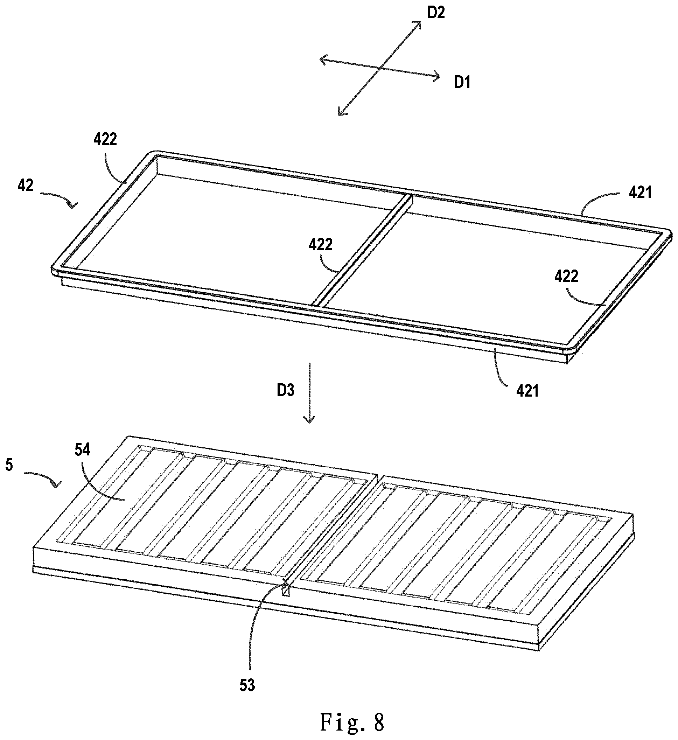

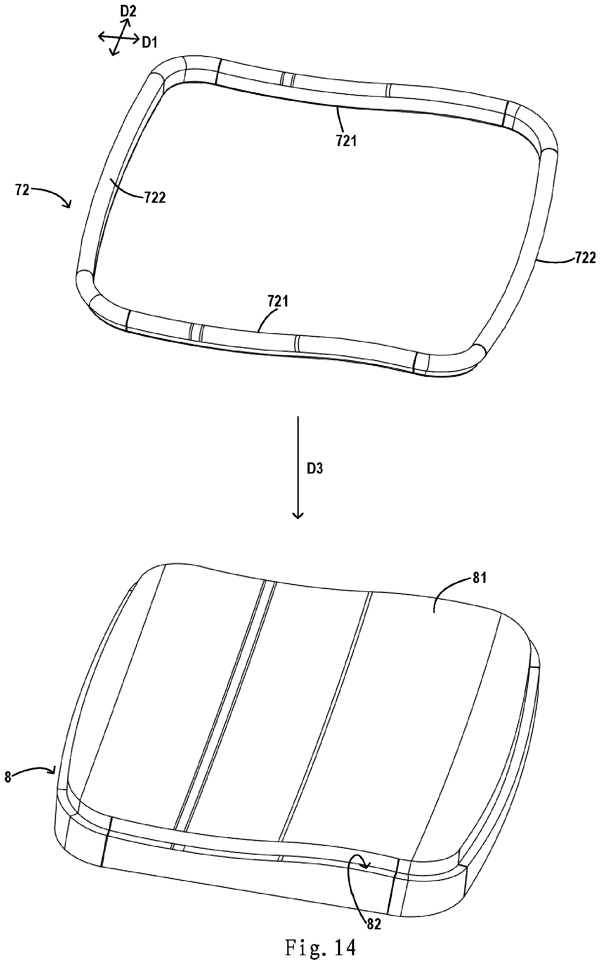

According to the present disclosure, there are provided a method of manufacturing a panel, the panel produced therefrom and furniture comprising the panel. Figures 1-7 depict a first embodiment of the present disclosure; Figures 8-13 depict a second embodiment of the present disclosure; and Figures 14-19 depict a third embodiment of the present disclosure. It is worth noting first that "plastic blank sheet" and "plastic panel" as used herein are terms for the same component at different process stages, where the component is called "plastic blank sheet" in the manufacturing process while called "plastic panel" for the final formed panel. In addition, the directional terms as used here are only provided for exemplary description, without limitation, which may be understood with reference to the directions as shown in the drawings.

Hereinafter, reference will be made to Figures 1-7 to describe the first embodiment of the present disclosure. Figures 1, 2, 3A, 4, 5A and 6A illustrate some steps performed sequentially in a method manufacturing a panel according to a first embodiment.

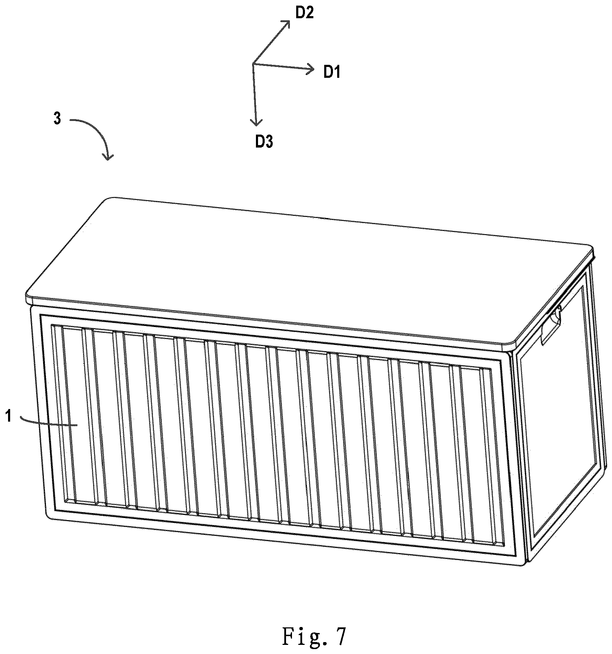

Referring to Figure 1, the panel 1 to be manufactured according to the embodiment (the final product of the panel 1 is shown in Figure 7) includes a frame 12 substantially of a rectangular shape, which includes three transverse beams 122 extending along a transverse direction D2 and two longitudinal beams 121 extending along a longitudinal direction D1. The shape of the final formed panel 1 is substantially similar to the shape of the frame 12, i.e., the formed panel 1 is of a substantially plate-like structure defined by the transverse direction D2 and the longitudinal direction D1. In the case, the direction perpendicular to the extension direction of the panel 1 may be understood as a third direction D3 as shown in Figure 1, which is perpendicular not only to the transverse direction D2 but also to the longitudinal direction D1.

In a step shown in Figure 1, the frame 12 is first placed on a top of a mold 2 matching the frame 12 in shape. Preferably, the mold 2 is provided at its bottom edge with a step portion 22 surrounding a body 21 of the mold 2, and the frame 12 is configured to adaptively sit on the step portion 22 around the body 21 of the mold 2. The body 21 of the mold 2 is further provided at the middle position in the longitudinal direction D1 with a slot 23 for fitting and receiving the transverse beam 122 located at the center of the frame 12. With such an arrangement, the frame 12 can be fittingly embedded onto the mold 2 to form a separable unit with the mold 2.

Preferably, the mold 2 is formed at its top surface with a plurality of raised ribs 54 spaced apart in the longitudinal direction D1 and respectively extending along the transverse direction D2, the function of which will be described in detail below.

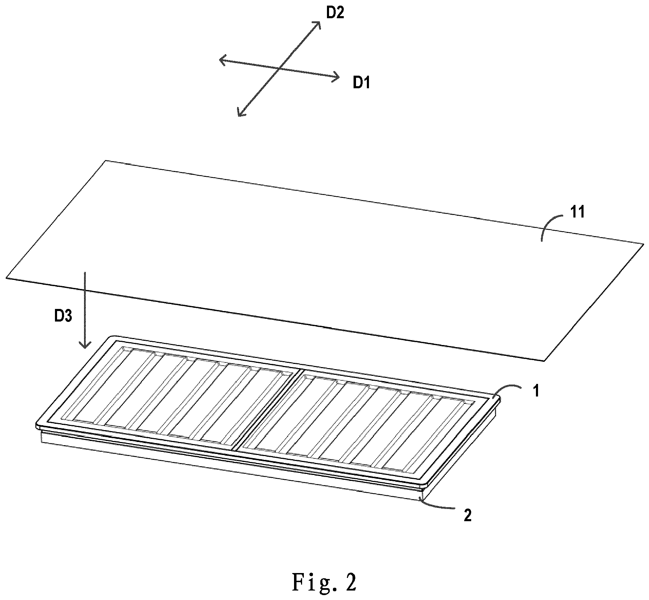

Referring to Fig. 2, after the frame 12 has been mounted on the top of the mold 2, the plastic blank sheet 11 is then disposed on the top surface of the mold 2 having the frame 12 mounted thereon. The plastic blank sheet 11 may be, for example, a polypropylene sheet.

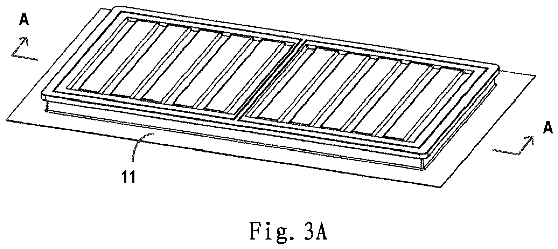

As shown in Figure 3A, along the direction (i.e., the third direction D3) perpendicular to the extension direction of the panel 1, a suction force is subsequently applied to the plastic bland sheet (e.g. by vacuum forming process) to form the plastic blank sheet 11 by vacuum forming. By doing so, the plastic blank sheet 11 wraps the frame 12 and the mold 2 such that the top surface and the side surfaces of the combination of the frame 12 and the mold 2 tightly fit with the plastic blank sheet 11, as shown in Figs. 3A-3C. Since the top surface of the mold 2 is a rugged surface, the plastic blank sheet shaped on the mold 2 by means of vacuum forming process is also formed in a rugged shape. This configuration is designed because that: the vacuum forming step is implemented by thermal processing, while the demolded plastic blank sheet 11 will contract after cooling; if the plastic blank sheet 11 is formed thereon with the rugged pattern, those rugged parts can compensate for the amount of contraction of the plastic blank sheet 11, such that the contracted plastic blank sheet 11 can more tightly wrap the frame 12 after cooling.

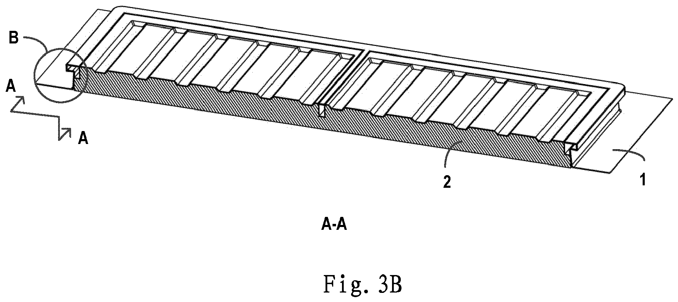

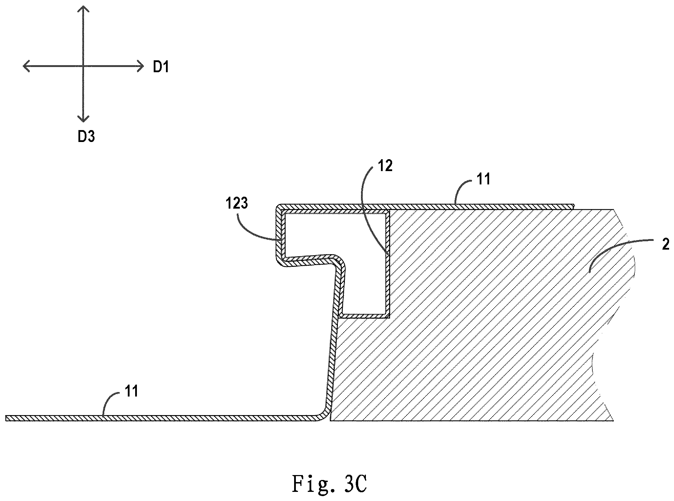

Figures 3B and 3C depict more details of the arrangement that the combination of the frame 12 and the mold 2 closely fits with the plastic blank sheet 11.

As shown in Figure 3C, the frame 12 is provided at its edge with a protrusion 123 which protrudes from the mold 2 parallel to the extension direction of the panel 1. In the sectional view of Figure 3C, the protrusion protrudes from the mold 2 along the longitudinal direction D1. However, it would be appreciated that the longitudinal beams 121 of the frame 12 may be provided thereon with protrusions protruding from the mold 2 in the transverse direction D2. After the vacuum forming step, the plastic blank sheet 11 wraps the protrusion 123, wherein the plastic blank sheet 11 tightly fits with the top surface, the side surface and the bottom surface of the protrusion 123, and the protrusion 123 is embedded within the plastic blank sheet 11 to prevent it from separating from the plastic blank sheet 11. It is to be understood that an outward facing surface of the protrusion used in the context refers to a surface of the protrusion facing outside, including the bottom surface and the side surfaces of the protrusion.

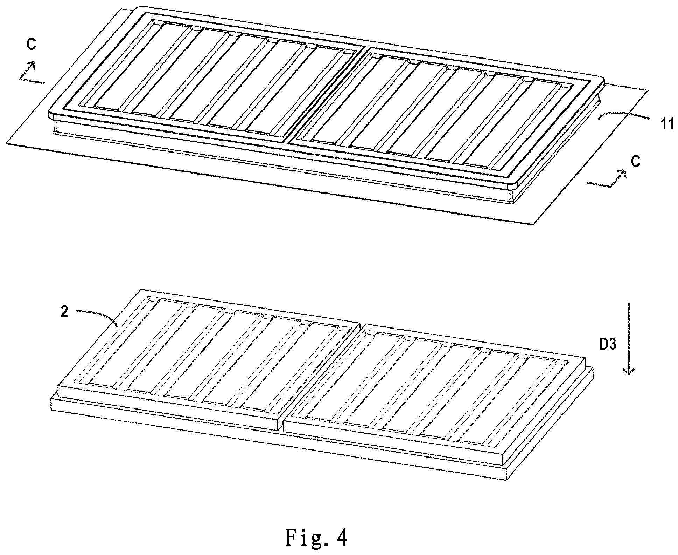

Figure 4 depicts a subsequent step of the process. At the step shown in Fig. 4, the mold 2 is moved in a direction perpendicular to the extension direction of the panel 1 (specifically, it is moved downwards along the third direction D3) to separate from the frame 12 and the plastic blank sheet 11. Since the protrusion 123 of the frame 12 is embedded in the plastic blank sheet 11, the frame 12 cannot be separated from the plastic blank sheet 11.

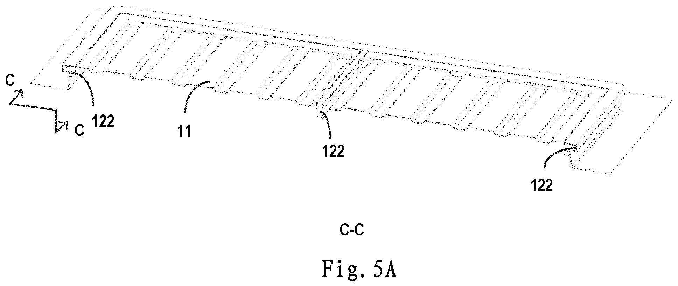

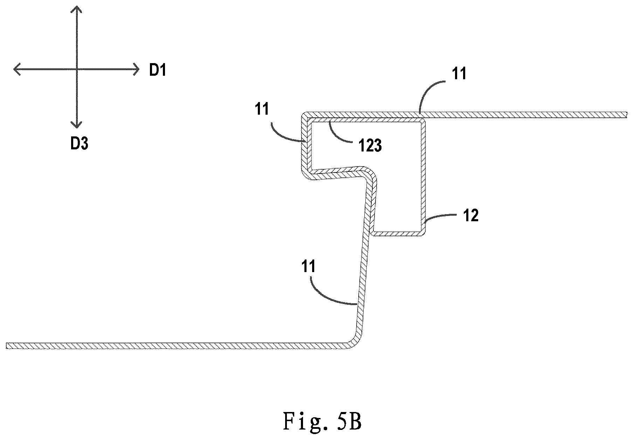

The demolded plastic blank sheet 11 is schematically depicted in Figures 5A and 5B. Especially referring to Figure 5B, the plastic blank sheet 11 wraps the top surface and the bottom surfaces of the protrusion 123 such that the frame 12 is limited not to move relative to the plastic blank sheet 11 in the third direction D3. Due to the entire cooperation between the frame 12 and the plastic blank sheet 11, the frame 12 cannot be moved relative to the plastic blank sheet 11 in the transverse direction D2 or the longitudinal direction D1, either. Therefore, the frame 12 cannot be taken out from the plastic blank sheet 11. At this time, the plastic blank sheet 11 and the frame 12 form an inseparable unit.

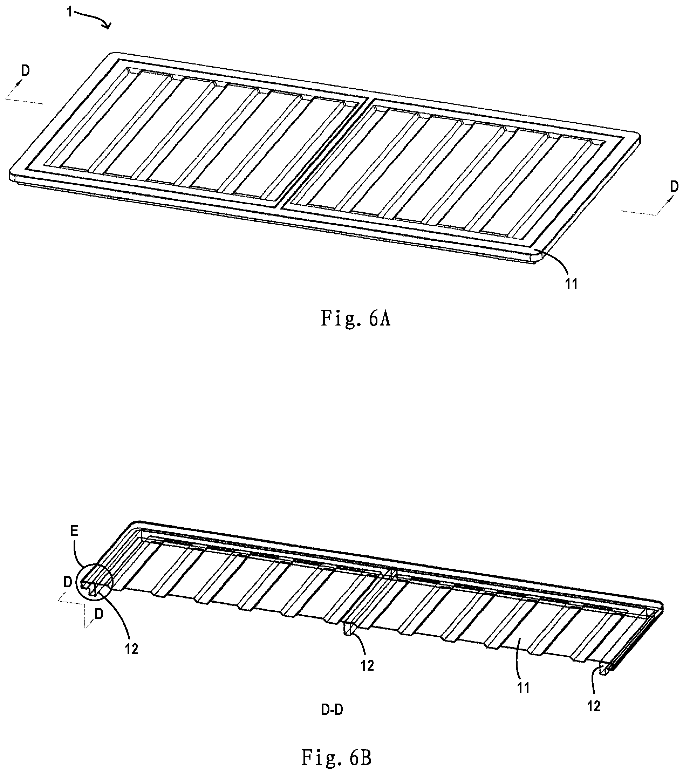

The next step is to cut and trim the plastic blank sheet 11, to at least guarantee that the trimmed plastic blank sheet 11 wraps the protrusion 123 of the frame 12 and thus ensure that the frame 12 is embedded in the plastic blank sheet 11. After the trimming step is completed, the final panel 1 is obtained. Figures 6A through 6C are diagrams of the final panel 1.

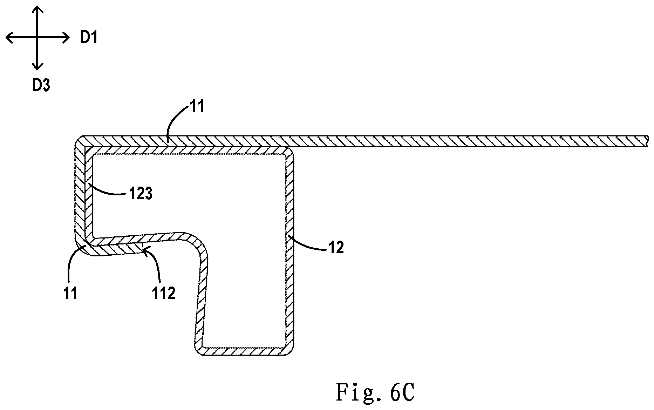

The trimming step includes: cutting the plastic blank sheet 11 along a cutting trace 112 which may be disposed on a part of the plastic blank sheet 11 fitting with the bottom surface of the protrusion 123, as shown in Figure 6C. In this way, the plastic panel (i.e., the final plastic blank sheet 11) includes a part positioned at the bottom of the protrusion 123 of the frame 12, which can play a role of supporting and limiting the protrusion 123, thus preventing the frame 12 from separating from the plastic panel 1.

The panel 1 manufactured through the above steps may be applied to, for example, a box 3 as shown in Figure 7. Specifically, the panel 1 may be formed as sidewalls of the box 3.

Figure 8 through 13C depict a second embodiment according to the present disclosure. The second embodiment is similar to the first embodiment, and the same or similar parts thereof thus are omitted for brevity.

Figure 8 depicts a first step of a method of manufacturing a panel 4 according to a second embodiment, which includes: moving the frame 42 downwards along the third direction D3 until it is placed on the top of the mold 5 which matches the frame 42 in shape. The frame 42 includes two longitudinal beams 421 and three transverse beams 422. Unlike in the first embodiment, the mold 5 in the second embodiment is not provided with a step portion, and the frame 45 surrounds the mold 5 in a cooperating fashion. Since the frame 42 includes a transverse beam 422 located at the middle position in the longitudinal direction D1 and the mold 5 includes a slot 53 corresponding to the transverse beam 422, the transverse beam 422 at the middle position can be embedded in the slot 53 of the mold 5, so that the frame 42 and the mold 5 fit with each other to form an inseparable unit. The mold 5 is provided at its top surface with a plurality of raised ribs 54.

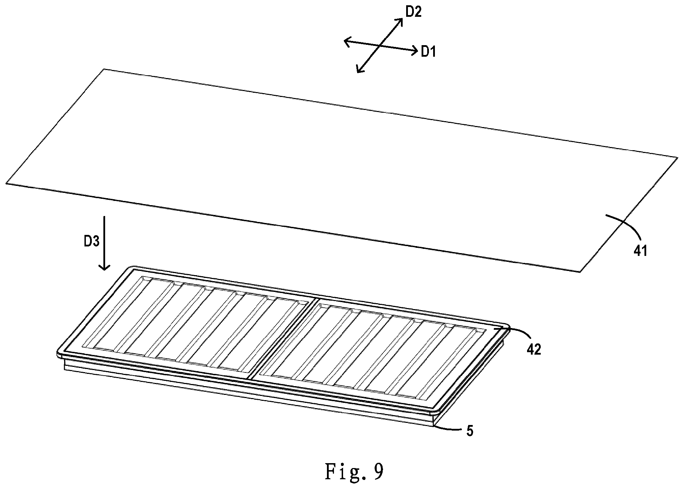

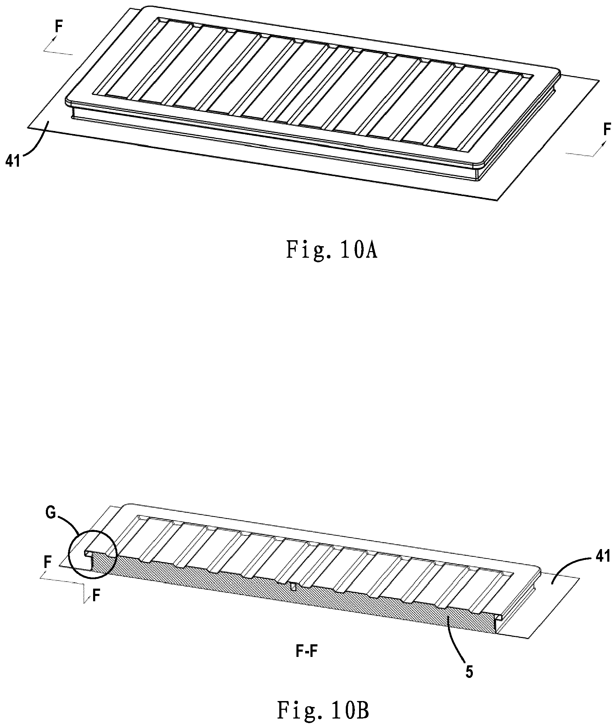

Figures 9 and 10A sequentially depict a next step, including: placing the plastic blank sheet 41 on the top surface of the mold 5 having the frame 42 mounted thereon, and applying a suction force in a direction perpendicular to the extension direction of the panel 4 so that the plastic blank sheet 41 is shaped by vacuum forming process in such a manner that the plastic blank sheet 41 wraps the frame 42 and the mold 5.

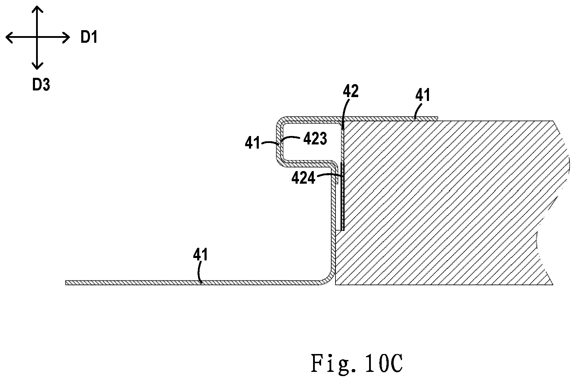

Figure 10B and 10C depict more details of Figure 10A. As shown in Figure 10C, the frame 42 includes a protrusion 423 protruding outwards relative to the mold 5 in a direction parallel to the extension direction of the panel 4, and the plastic blank sheet 41 shaped after the vacuum forming process tightly wraps the protrusion 423 so as to fix the frame 42 relative to the plastic blank sheet 41. In the second embodiment, the top of the inner wall 424 of the frame 42 and the protrusion 423 are fixed together while the bottom of the inner wall 424 is free.

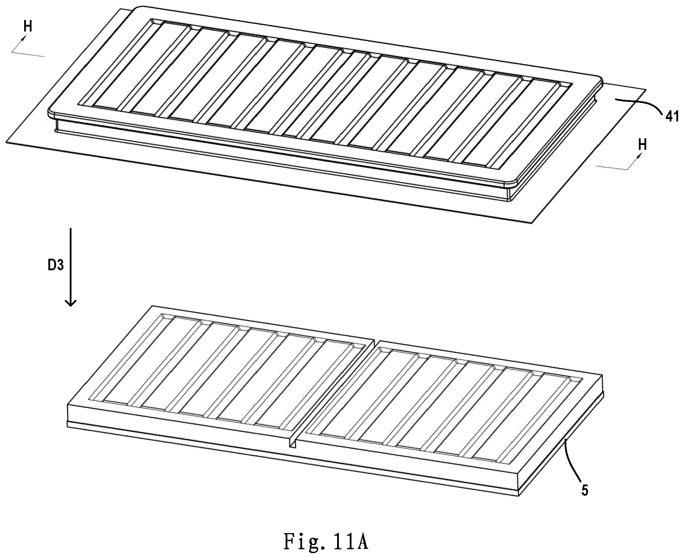

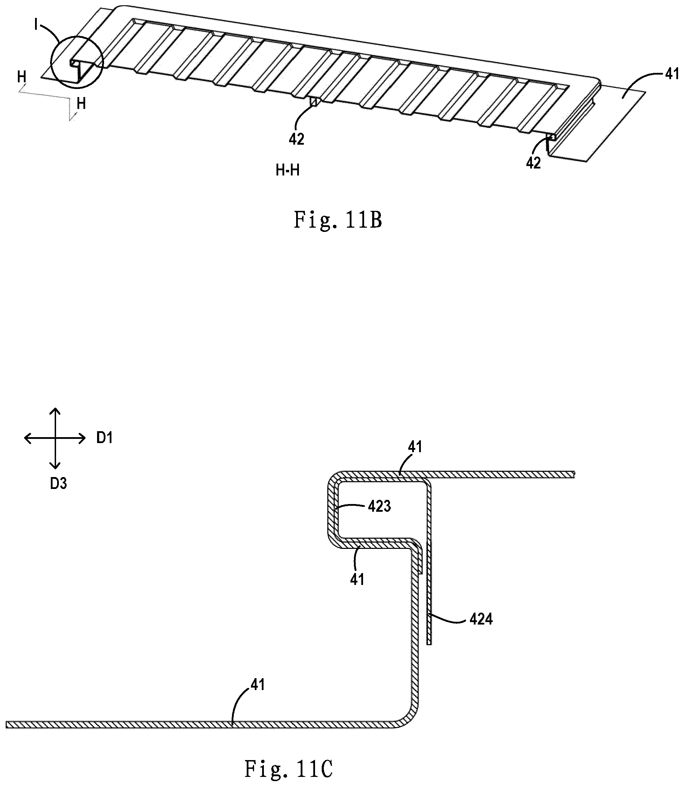

Figure 11A depicts the step of moving the mold 5 downwards in the third direction D3 to separate it from the plastic blank sheet 41 and the frame 42, and Figures 11B and 11C depict the plastic blank sheet 41 and frame 42 after the demolding process in detail. As shown in Figure 11C, the protrusion 423 of the frame 42 is restricted within the plastic blank sheet 41, making it impossible to separate the frame 42 from the plastic blank sheet 41. After demolding, the free end of the inner wall 424 of the frame 42 is not in contact with any other components.

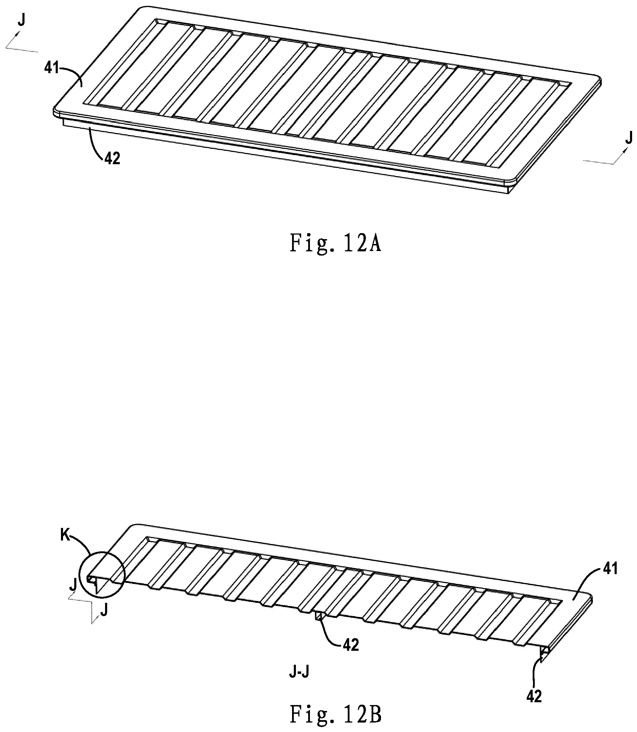

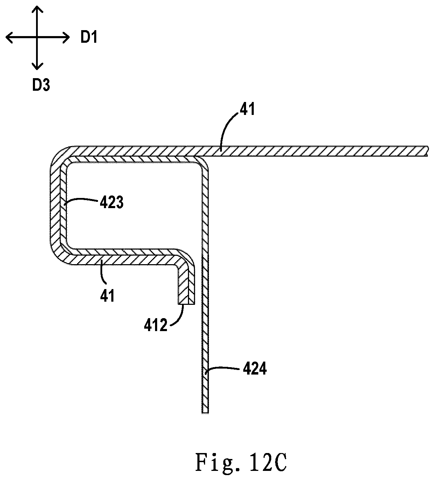

The demolding step is followed by a trimming step. Figures 12A through 12C depict the plastic blank sheet 41 and mold 5 after trimming. Referring to Figure 12C, the cutting trace 412 used during trimming is positioned at a part of the plastic blank sheet 41 disposed below the protrusion 423 and configured to get in touch with the outer wall of the frame 42. At this time, the free end of the inner wall 424 of the frame 42 protrudes downwards relative to the cutting trace 412 of the plastic blank sheet 41.

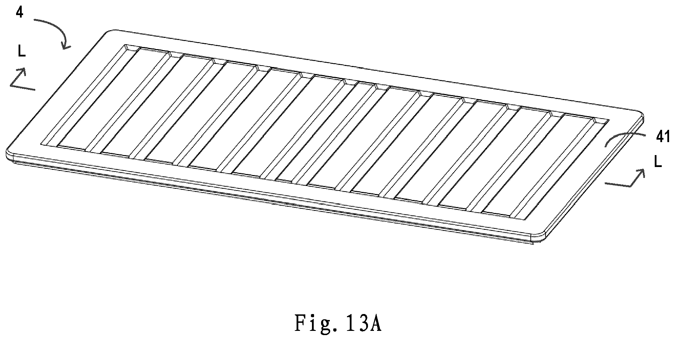

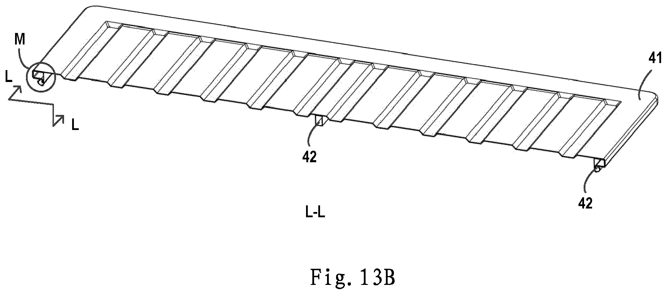

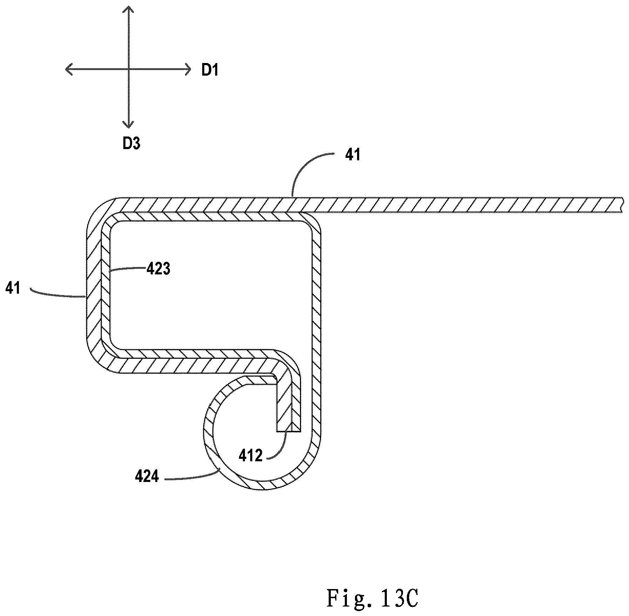

Preferably, referring to Figures 13A through 13C, the following operation is performed after trimming, including: rolling the free end of the inner wall 424 outwards and upwards to shield the cutting trace 412 of the plastic sheet 41. Referring to Figure 13C, the plastic blank sheet 41 still wraps the protrusion 423 of the frame 42, and the inner wall 424 of the frame 42 is rolled outwards and upwards to shield the cutting trace 412 of the plastic blank sheet 41. In this way, the panel 4 has an advantageous profile feature, and can prevent a user from easily separating the plastic blank sheet 41 from the frame 42 along the cutting trace 412, thereby further guaranteeing a firm connection between the frame 42 and the plastic blank sheet 41. In addition, the curl of the frame 42 will cover the cutting trace 412 of the plastic blank sheet 41 to prevent the cutting trace 412 from scratching the user. Therefore, the resultant product exhibits a better performance in safety.

Figures 14 through 18C depict a third embodiment of the present disclosure. The third embodiment is similar to the first embodiment, and thus the same or similar parts thereof are omitted for brevity.

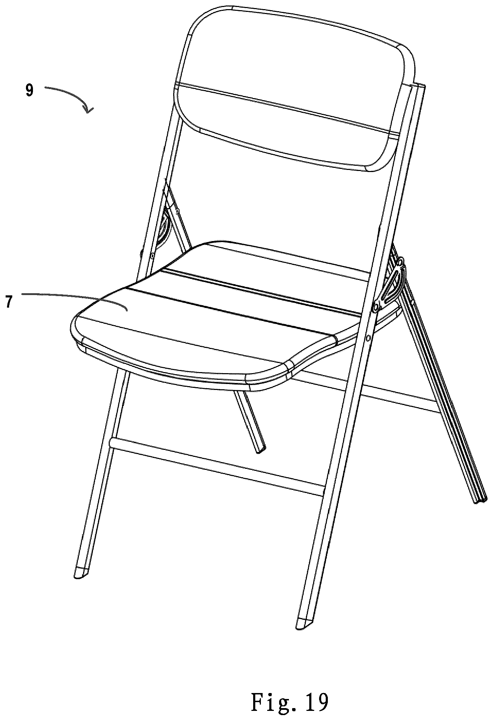

Figure 14 depicts a first step of a method of manufacturing a panel 7 (the final product of the panel 7 is depicted in Figure 19) according to the third embodiment, which includes: placing the frame 72 on a top of a mold 8 matching with the frame 72 in shape. The frame 72 includes two longitudinal beams 721 and two transverse beams 722. The mold 8 is provided at its edge a step portion 82 surrounding the body 81 of the mold 8, and the frame 72 can be placed on the step portion 82.

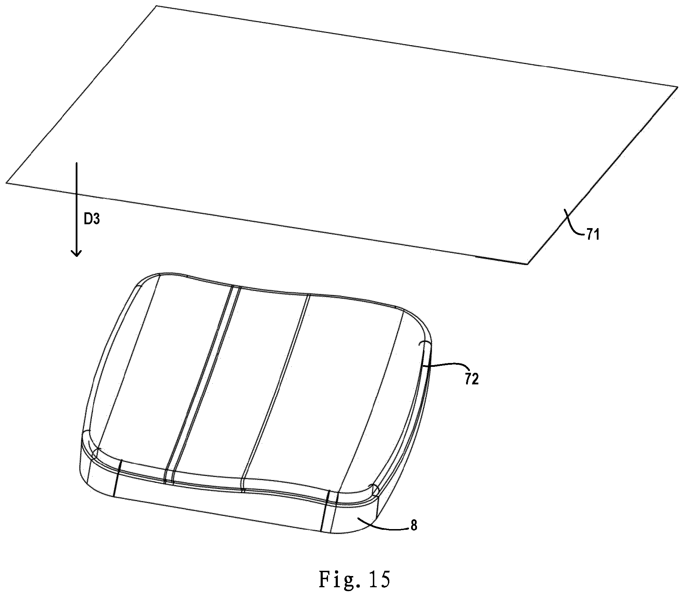

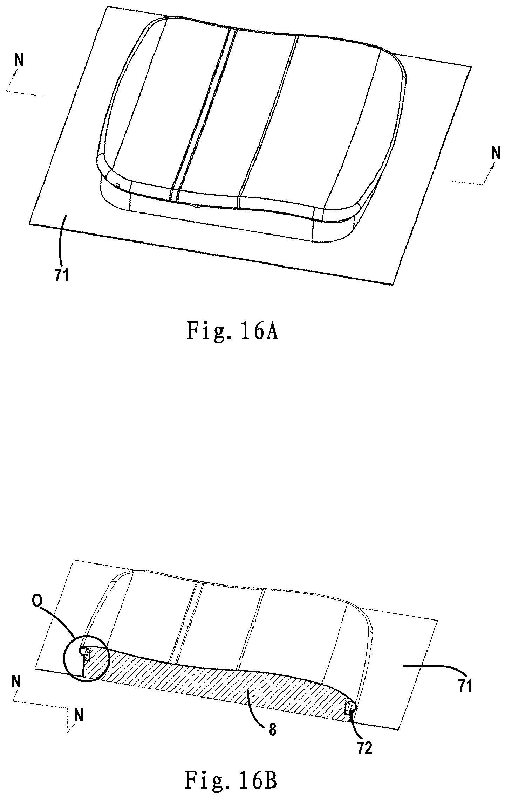

Figures 15 and 16A sequentially depict the next step of the method: placing the plastic blank sheet 71 on the top surface of the mold 8 having the frame 72 mounted thereon, and applying a suction force in a direction perpendicular to the extension direction of the panel 7 so that the plastic blank sheet 71 is shaped by vacuum forming process in such a manner that the plastic blank sheet 71 wraps the frame 72 and the mold 8.

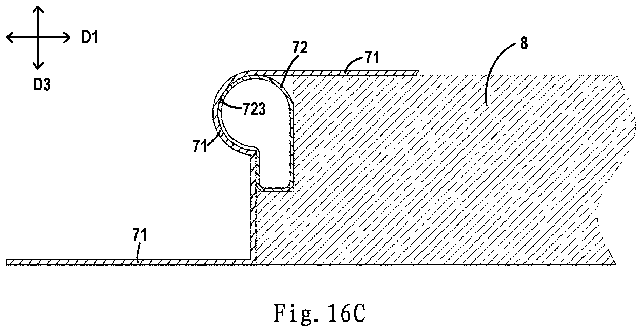

The combination of the plastic blank sheet 71, the frame 72 and the mold 8 after the vacuum forming step is depicted in Figures 16B and 16C. Referring to Figure 16C, the plastic blank sheet 71 tightly fits with the top surface and the side surfaces of the combination of the frame 72 and the mold 8 to wrap them therein. The protrusion 723 of the frame 72 in the embodiment has an arc-shaped cross section, which may be understood as the protrusion 723 not having edges and corners, thereby improving the touch feeling of the final product. The plastic blank sheet 71 shaped by vacuum forming closely contacts with the protrusion 723 to restrict the frame 72 having the protrusion 723 therein.

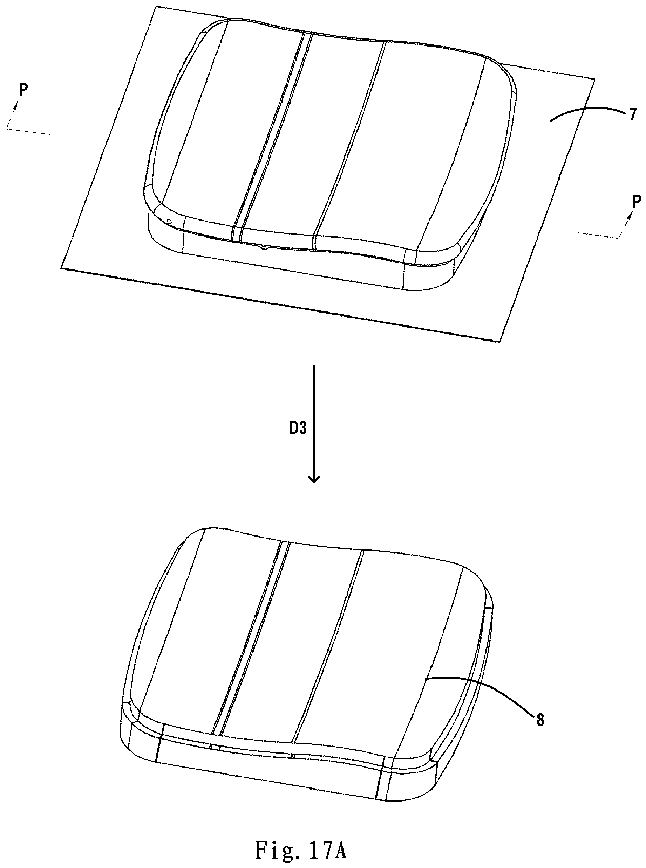

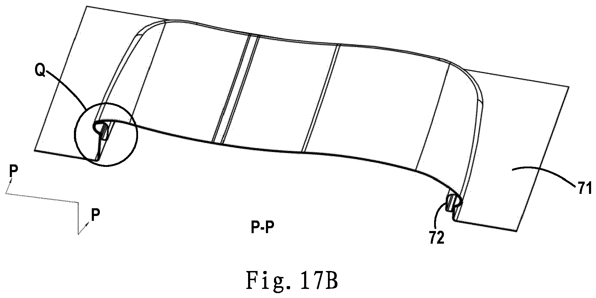

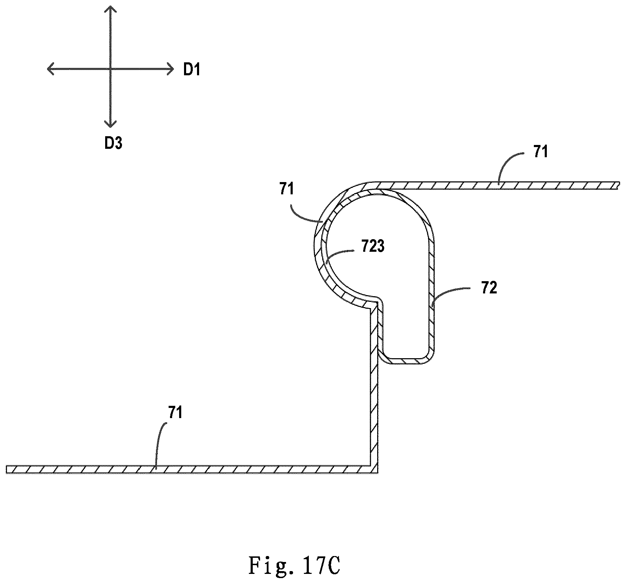

Figure 17A depicts a step of moving the mold 8 downwards along the third direction D3 to separate from the plastic blank sheet 71 and the frame 72, and Figures 17B and 17C depict the plastic blank sheet 71 and the frame 72 after the demolding in detail. As shown in Figure 17C, the protrusion 723 of the frame 72 is limited within the plastic blank sheet 71, so that it is impossible to separate the frame 72 from the plastic blank sheet 71.

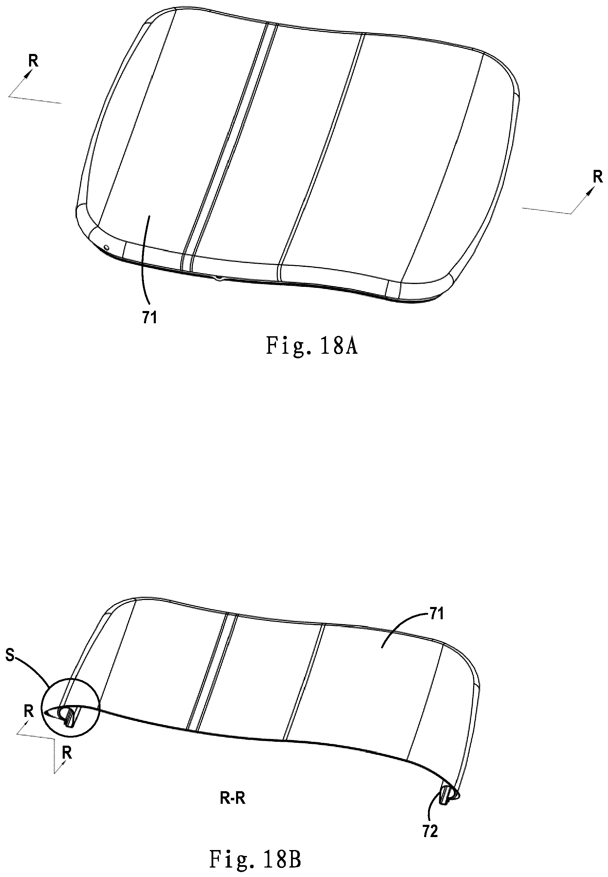

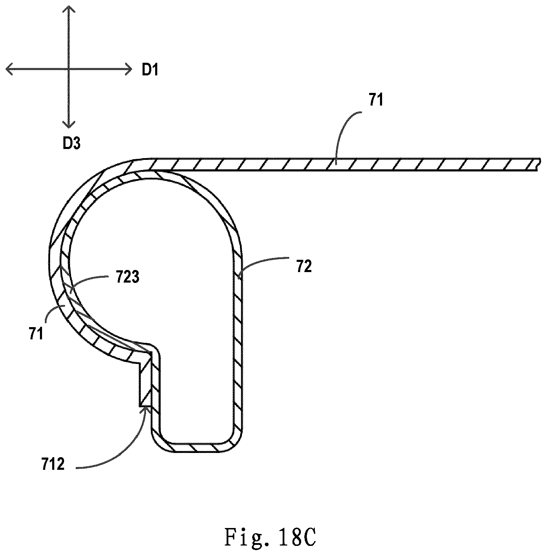

The demolding step is followed by a trimming step, and Figures 18A through 18C depict the plastic blank sheet 71 and the mold 8 after the trimming step. Referring to Figure 18C, a cutting trace 712 used during trimming is positioned at a part of the plastic blank sheet 71 disposed below the protrusion 723 and configured to get in contact with the outer side wall of the frame 72, thereby at least guaranteeing that the trimmed plastic blank sheet 71 wraps the protrusion 723 of the frame 72 and thus ensuring that the frame 72 is embedded in the plastic blank sheet 71.

In the third embodiment, the top surface of the mold 8 is a smooth undulating surface, and the top surface of the obtained panel 7 is a smooth undulating surface accordingly.

Figure 19 depicts an application of the panel 7 manufactured with the method according to a third embodiment to furniture, where the furniture may be a chair 9, and the panel 7 may be the seating portion.

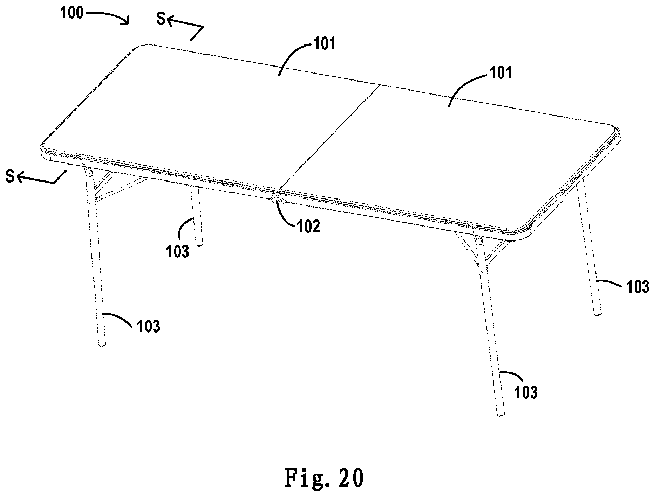

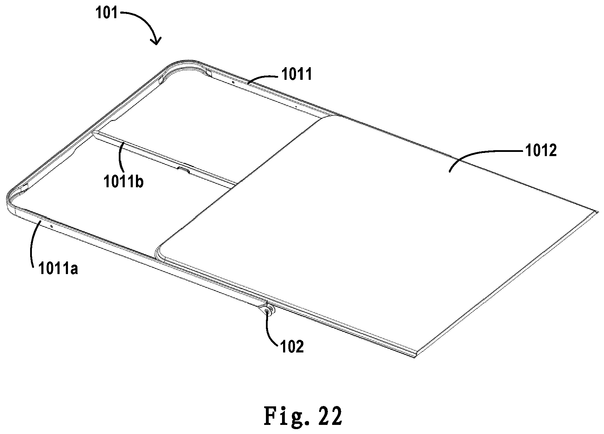

Figures 20 -24 depict a fourth embodiment according to the present disclosure. In the embodiment, the panel manufactured with the method according to the present disclosure is used to manufacture a desk. Referring to Figure 20, the desk 100 in the embodiment includes a desk board and legs 103. The desk board includes two desk board units 101 foldable around an axis 102 relative to each other. In other embodiments, the desk 100 may include three or more desk board units 101.

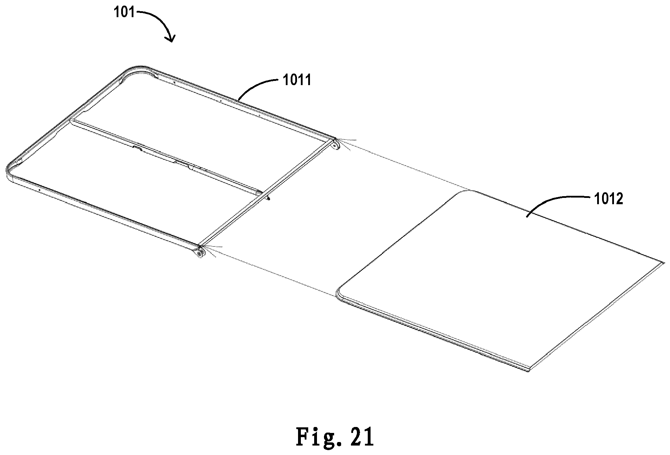

Figures 21-22 are schematic diagrams of assembling a desk board unit shown in Figure 20. As shown in the drawings, each desk board unit 101 includes a desk board frame 1011 and a desk board body 1012 cooperating with each other. A pair of opposing edges of the desk board frame 1011 are provided with sliding grooves opposing to each other and extending along the respective edges, and edges of the desk board body 1012 correspond to the sliding grooves such that the desk board body 1012 can slide along the sliding grooves from the outside of the desk board frame 1011 to fully engage with the desk board frame 1011. The desk board frame 1011 includes a pair of edge beams 1101a and a middle beam 1011b, and the sliding grooves are formed on the opposing side surfaces of the pair of edge beams 1011 a.

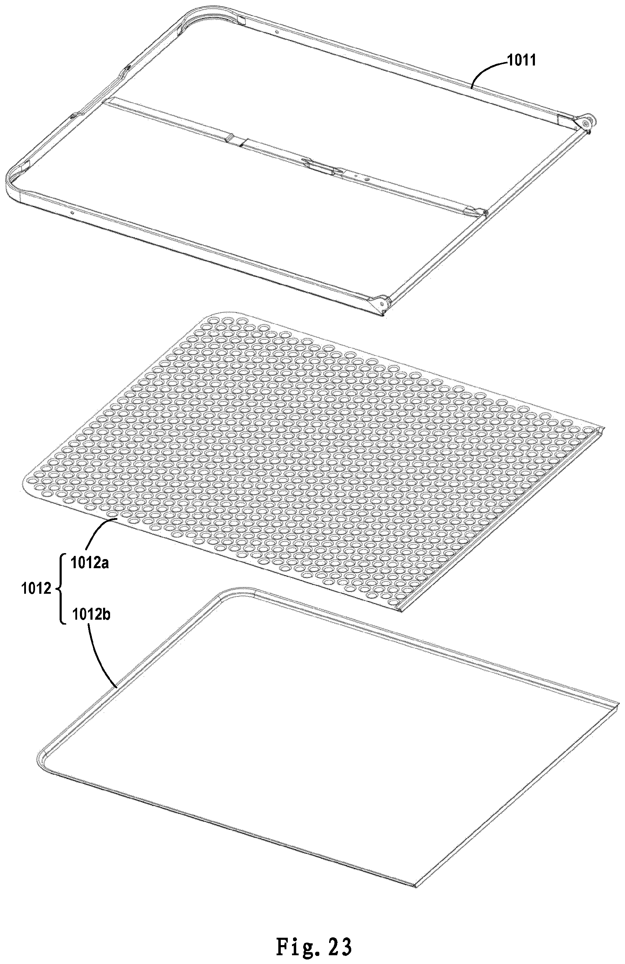

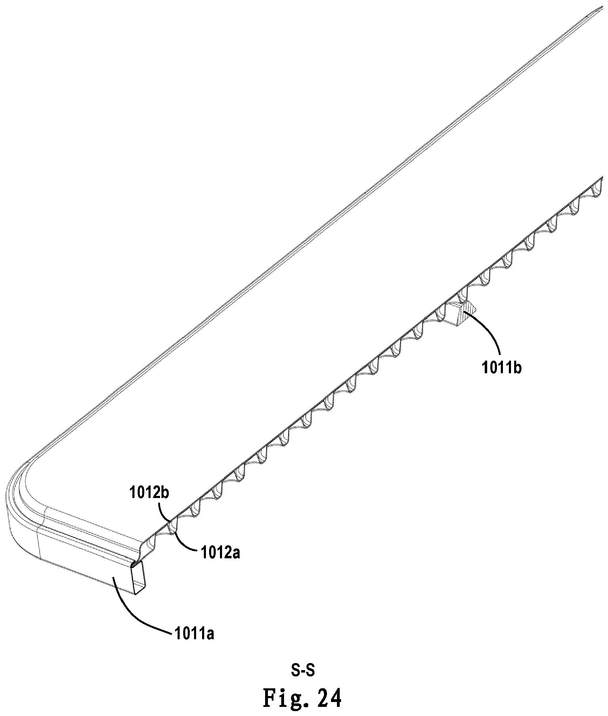

Referring to Figures 23 and 24, the desk board body 1012 is formed by attaching at least two layers of panels to each other, which are specifically a plane panel 1012b and a corrugated panel 1012a in the embodiment. The plane panel 1012b and the corrugated panel 1012a are attached to each other to form the desk board body 1012, and Figure 24 shows the state where the edges of the desk board body 1012 are embedded in the sliding grooves of the desk board frame 1011.

Referring to Figures 23 and 24, the desk board body 1012 includes at least two layers of panels attached to each other and has a special arrangement at a pair of parallel edges opposing each other, where the desk board body 1012 has a thickness at the pair of parallel edges less than that at the middle position. The desk board frame 1011 surrounds the desk board body 1012 and can engage with the respective edges of the desk board body 1012, where the parts of the desk board frame 1011 corresponding to the pair of parallel edges of the desk board body 1012 each have a recess (which forms the sliding groove) that opens towards the desk board body 1012 and extends along the extension direction of the parallel edges. Wherein, the size of the opening of the recess is consistent with the thickness of the desk board body 1012 at the pair of the parallel edges, such that the pair of parallel edges of the desk board body 1012 can be inserted into the respective recesses of the desk board frame 1011 and slide therein along the extension direction of the parallel edges, thereby assembling the desk board body 1012 with the desk board frame 1011.

It is worth noting that, although "at least two layers of panels" are formed by vacuum forming as mentioned above, other improvements are allowed on the basis of the vacuum forming process (e.g., further reinforcement or tailoring process) to make the shape of the panel different than other panels formed by vacuum forming.

The method of manufacturing a panel according to the present disclosure can achieve the effect of retaining the metal frame within the plastic panel after vacuum forming such that the panel formed by vacuum forming has both a smooth profile and a high strength. In the subsequent use, the panel is invulnerable to deformation and thus can be prolonged in service life.

The above description on multiple embodiments of the present disclosure are provided to the ordinary skilled in the related field for the purpose of illustration, without any intention to make the present disclosure exclusive or confine the same to a single embodiment disclosed here. As aforementioned, the ordinary skilled in the art would understand that multiple replacements and variations of the present disclosure are also applicable. Therefore, although some alternative embodiments are described here in detail, the ordinary skilled in the art would envision or develop easily other embodiments. The present disclosure is intended to cover all the replacements, modifications and variations of the present disclosure, and other embodiments falling into the spirits and scope described here.

## Claims

1. A method of manufacturing a panel, the panel comprising a frame and a plastic panel wrapping the frame, the method comprising steps of:
placing the frame on a top of a mold matching the frame in shape, wherein a protrusion is formed at an outer edge of the frame, extending and protruding outwards from the mold in an extension direction of a formed panel;
placing a plastic blank sheet on a top surface of the mold having the frame mounted thereon, and applying a suction force in a direction perpendicular to the extension direction of the formed panel to shape the plastic blank sheet by a vacuum forming process, such that the plastic blank sheet wraps the frame and the mold;
moving the mold along a direction perpendicular to the extension direction of the panel to separate the mold from the frame and the plastic blank sheet; and
cutting and trimming the plastic blank sheet, to guarantee that the trimmed plastic blank sheet at least covers an outward facing surface of the protrusion of the frame and thus ensure that the frame is embedded within the trimmed plastic blank sheet.

2. The method of claim 1, wherein the mold at a bottom edge is provided with a step portion formed around a body of the mold, and the frame is configured to adaptively sit on the body of the mold and on the step.

3. The method of claim 2, wherein the top surface of the mold is a rugged surface such that the plastic blank sheet shaped by vacuum forming has an undulating shape at a corresponding position.

4. The method of claim 3, wherein the mold is of a rectangular shape defined in a transverse and a longitudinal direction, and the mold is formed at a top surface with a plurality of raised ribs spaced arranged in the longitudinal direction and extending in the transverse direction such that a top surface of a final panel is shaped as the rugged surface.

5. The method of claim 2, wherein the top surface of the mold is a smoothly undulating surface, which results in that the top surface of a final panel is a smooth undulating surface accordingly.

6. The method of claim 1, wherein the trimming step comprises: cutting the plastic blank sheet along a cutting trace located on a part of the plastic blank sheet fitting with a bottom surface of the protrusion.

7. The method of claim 1, wherein the trimming comprises: cutting the plastic blank sheet along a cutting trace that is located on a part of the plastic blank sheet disposed below the protrusion and fitting with an outer wall of the frame.

8. The method of claim 7, wherein the frame at an inner surface is provided at an inner surface with an inner wall extending perpendicularly downwards from a top wall of the frame, and the method further comprises: after the trimming, rolling a lower end of the inner wall outwards and upwards in order to shield the cutting trace of the plastic blank panel.

9. The method of any of claims 1-8, wherein the method comprises:
selecting a metal frame as the frame;
selecting a polypropylene sheet as the plastic blank sheet; and
shaping the plastic blank sheet by vacuum molding process.

10. A panel manufactured with a method of any of claims 1-9, wherein the panel comprises a plastic panel and a frame, and the plastic panel is shaped by vacuum forming process and wraps the frame therein.

11. Furniture, comprising a panel of claim 10.

12. The furniture of claim 11, wherein the furniture is a box, and the panel is formed as at least a part of a sidewall of the box.

13. The furniture of claim 11, wherein the plastic panel is formed by vacuum forming to have a smooth undulating surface, the furniture is a chair, wherein the panel is formed into a seat of the chair.

14. The furniture of claim 11, wherein the furniture is a desk comprising a desk board and legs, the desk board comprising:
a desk board body comprising at least two layers of panels attached to each other and having a pair of parallel edges opposing to each other, the desk board body at the pair of parallel edges having a thickness less than a thickness at a middle position of the desk board body;
a desk board frame surrounding the desk board body and enabling to engage with the corresponding edges of the desk board body, wherein each of the parts of the desk board frame corresponding to the pair of parallel edges of the desk board body is formed with a recess that opens towards the desk board body and extends in an extension direction of the parallel edges;
wherein an opening size of the recess is consistent with the thickness of the desk board body at the pair of parallel edges such that the pair of parallel edges of the desk board body can be inserted into the corresponding recesses of the desk board frame and slide therein along the extension direction of the parallel edges, thereby assembling the desk board body with the desk board frame; and
wherein the desk board body is formed by attaching at least two layers of the panels.

15. The furniture of claim 14, wherein the desk board comprises at least two desk board units foldable relative to each other, and each desk board unit comprises a pair of the desk board frame and the desk board body cooperating with each other.
